# EUROPEAN PATENT APPLICATION

(11) **EP 2 043 297 A1**
(43) Date of publication of application: **01.04.2009**
(21) Application number: 08016381.9
(22) Date of filing: 17.09.2008
(51) Int. Cl.: H04L 12/24

(54) **System and method for managing devices connected to a computer network**

(30) Priority: 27.09.2007 JP 2007252278
(71) Applicant: Fujitsu Limited, Kawasaki-shi, Kanagawa 211-8588 (JP)
(72) Inventor: Miwa, Mitsuhiko, Kawasaki-shi, Kanagawa 211-8588 (JP); Mizuta, Kazuo, Kawasaki-shi, Kanagawa 211-8588 (JP)
(74) Representative: HOFFMANN EITLE

(57) **Abstract**

According an aspect of the embodiment, there is provided a method for managing management target devices each connected to a computer network and managed by one of a plurality of management servers. A management server list storing IP addresses of the plurality of management servers is provided. A hop count defined as the number of hops, in the computer network, from the management target device to the each of the plurality of management servers is obtained and a management server having the smallest hop count among the plurality of management servers is selected as an optimum management server. Then, the management target device is managed under the control of the selected optimum management server.

## Description

### BACKGROUND OF THE INVENTION

### 1. Field of the Invention

The present invention relates to a system and method for managing devices connected to a computer network by a plurality of management servers. More particularly, the invention is directed toward a system that removes the burden of manual registration of devices to be managed in a management server and that enables efficient selection of a management server that is most suitable for the device to be managed.

### 2. Description of the Related Art

Hitherto, a management system in which a management server remotely manages one or more devices via the computer network has been known. For example, Japanese Unexamined Patent Application Publication No. 2002-342182 discloses a management support system. In the management support system, a management server collects operational information on the operational status of a management target system connected to the management server via a computer network. When a value related to the operational information exceeds a predetermined range, the management server determines that, for example, a decrease in performance or a failure occurs in the management target system. Then, the management server determines the cause on the basis of the operational information and sends a notification of the cause.

Recently, as is represented by the introduction of Internet Protocol version 6 (IPv6), as computer networks have grown, the number of management target devices, such as network home electric appliances, connected to the computer networks has been increasing rapidly. Thus, in a management system, all management target devices cannot be managed using only a single management server. Thus, decentralization of management has been performed, in which a plurality of management servers are scattered, each management target device is assigned to one of the plurality of management servers as a management target thereof, and the one of the plurality of management servers is caused to manage the management target device.

However, in known arts typified by the art disclosed in Japanese Unexamined Patent Application Publication No. 2002-342182, for a given device, a management server that manages the given device needs to be manually determined and set up in advance. Specifically, in a case where a plurality of management servers exist, when a new management target device is connected to a computer network, one of the plurality of management servers that manages the management target device needs to be manually determined, and the management target device needs to be manually registered in the one of the plurality of management servers. Moreover, recently, since computer networks have been developed to be complicated, it has been difficult to manually determine the most suitable management server.

To solve the aforementioned problems, it is an object of the present invention to provide a system and method that remove the burden of manual registration of a management target device in a management server and that enable efficient selection of a management server that is most suitable for the device to be managed.

### SUMMARY

According to an embodiment, there is provided a method for managing management target devices each connected to a computer network and managed by one of a plurality of management servers. The method comprises the steps of providing a management server list for storing IP addresses of the plurality of management servers; counting a hop count defined as the number of hops, in the computer network, from the management target device to the each of the plurality of management servers; selecting a management server having the smallest hop count among the plurality of management servers; and managing the management target device under the control of the selected management server.

According to one aspect of the embodiment, a management server list is provided to an integrated management server for managing a plurality of management servers, and the management target device selects a management server suitable for managing a management target device on the basis of hop counts received from the plurality of management servers listed on the management server list which is received from the integrated management server.

According to another aspect of the embodiment, a management server list is provided to the management target device, and an integrated management server for managing a plurality of management servers selects a management server suitable for managing a management target device on the basis of hop counts received from the plurality of management servers listed on the management server list.

### BRIEF DESCRIPTION OF THE DRAWINGS

Fig. 1 is a diagram illustrating an example of the outline of a known method for determining a management server;
Fig. 2 is a diagram illustrating an example of the outline of a method for determining a management server according to an embodiment;
Fig. 3 is a block diagram illustrating a configuration of an operational management system according to a first embodiment;
Fig. 4 is a diagram illustrating an example of a management server list according to an embodiment;
Fig. 5 is a sequence diagram illustrating determination of a management server according to the first embodiment;
Fig. 6 is a block diagram illustrating a configuration of an operational management system according to a second embodiment; and
Fig. 7 is a sequence diagram illustrating determination of a management server according to the second embodiment.

### DESCRIPTION OF THE PREFERRED EMBODIMENTS

A method and system according to first and second embodiments will now be described in detail with reference to the attached drawings. Hereinafter, in the first and second embodiment, 'a management server' is expressed as 'an operation support system (OSS) area server', and 'an integrated management server' is expressed as 'an OSS integrated server'.

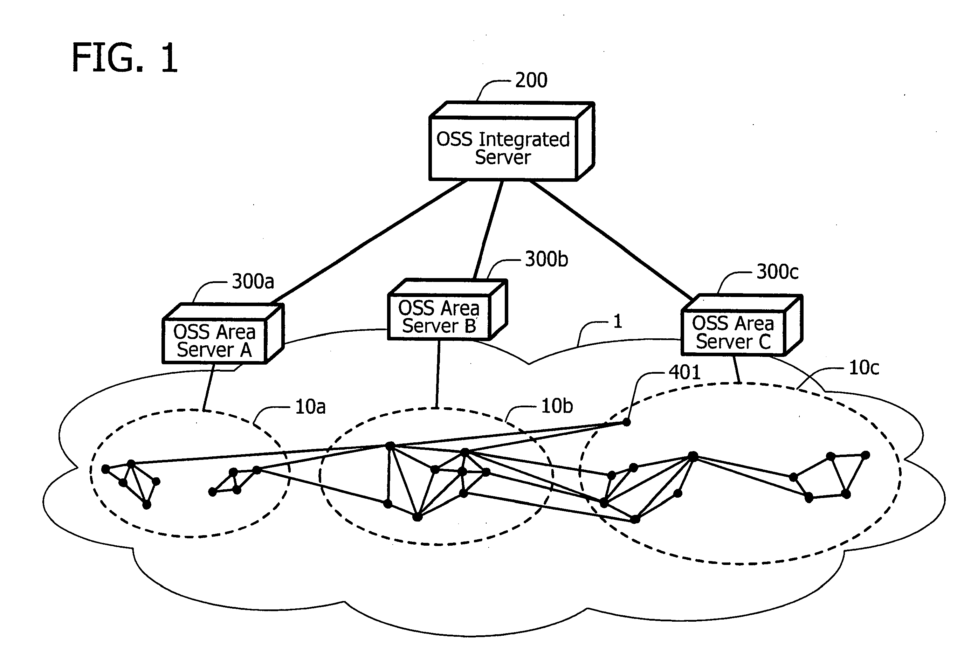

Fig. 1 is a diagram illustrating an example of the outline of a known method for determining a management server.

For example, Japan can be divided into five areas (Hokkaido, eastern Japan, western Japan, Shikoku, and Kyushu), and five OSS area servers can be located in the individual areas so as to manage devices located in the individual areas.

In the following description, for the sake of simplification, it is assumed that a computer network is divided into three areas and there exist three management servers corresponding each of the divided areas.

In the first and second embodiment, for example, three OSS area servers A, B, and C under the control of an OSS integrated server (functioning as an integrated management server) are connected to the OSS integrated server (functioning as an integrated management server) via a computer network, as shown in Fig. 1. The OSS area server A 300a (management server) manages management target devices that exist in the management target area of the OSS area server A 300a. Similarly, the OSS area server B 300b manages management target devices that exist in the management target area of the OSS area server B 300b, and the OSS area server C 300c manages management target devices that exist in the management target area of the OSS area server C 300c. The network 1 including management target devices is divided into the management target areas 10a, 10b, and 10c each corresponding to the OSS area servers (the management servers) 300a, 300b, and 300c, respectively.

The OSS integrated server 200 (functioning as an integrated management server) is a server device that centrally manages the OSS area servers A 300a, B 300b, and C 300c. The reason why the computer network 1 is divided into the individual areas of the OSS area servers A 300a, B 300b, and C 300c is because, as the computer network 1 have grown, the number of devices functioning as management target devices has increased and processing loads of operational management need to be distributed. Thus, the OSS integrated server 200 is provided in order to centrally manage the OSS area servers 300a, 300b, and 300c, each of which bears distributed processing loads of operational management of the devices. Such hierarchical structure is adopted to ensure the scalability of an operational management system.

In the known art, for example, when a newly added device 401 functioning as a management target device is added to the computer network 1, as shown in Fig. 1, since the newly added device 401 exists in the management target area 10c of the OSS area server C 300c, the newly added device 401 is treated as a management target device to be managed by the OSS area server C 300c. This setting is manually performed by, for example, an administrator. Setting of a management target area is performed according to artificial rules, and registration of the newly added device 401 as a management target device of the OSS area server C 300c is manually performed. Thus, since not only the burden of manual operations is caused, but also an OSS area server that should manage the newly added device 401 is manually determined, it is difficult to say that efficient and appropriate determination of an OSS area server can be performed.

This is because, recently, computer networks have grown rapidly, and networks, in which relay devices such as routers are used as relay nodes, have stretched to be mesh-like networks. In a situation in which network topologies rapidly become complicated, manual determination of an OSS area server that manages a network device as a management target device results in disregarding the efficiency of communication in networks. Thus, the efficiency of communication between a network device and an OSS area server that manages the network device is not necessarily ensured. Moreover, an OSS area server may be determined so that the efficiency of communication is decreased.

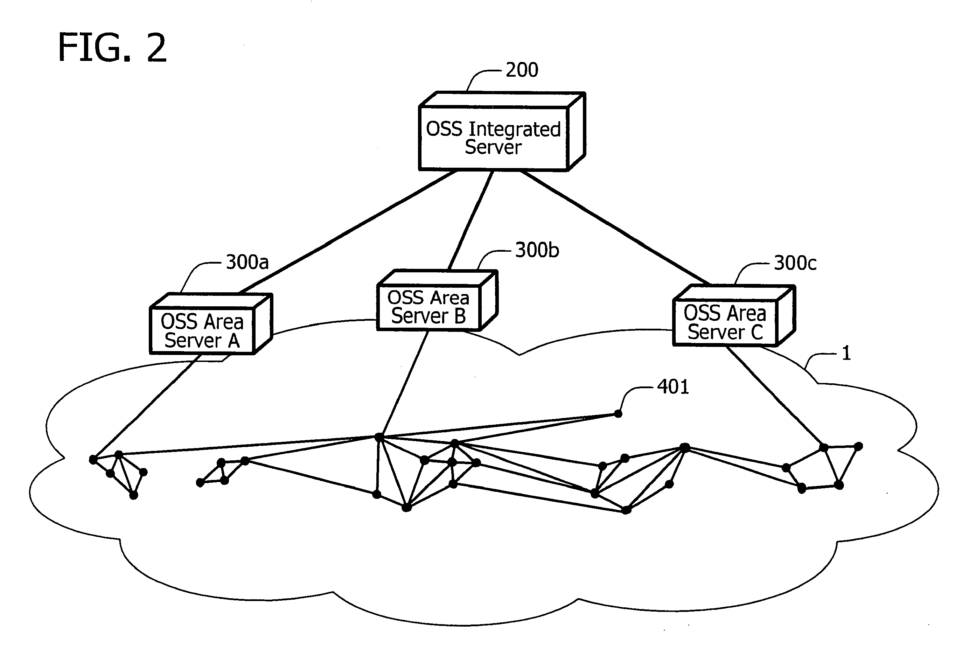

Fig. 2 is a diagram illustrating an example of the outline of a method for determining a management server according to an embodiment

In Fig. 2, the newly added device 401 as a management target device is added to the computer network 1 without dividing the management target area into several areas like in the known art. That is, on the basis of a hop count that indicates the number of relay nodes between the newly added device 401 and each OSS area server, an OSS area server having the smallest hop count is selected as an optimum OSS area server that manages the newly added device 401, as shown in Fig. 2. Moreover, a management agent installed in the newly added device 401 enables autonomous execution of this process. In this arrangement, the burden of registration of the newly added device 401 as a management target device in a suitable OSS area server is removed, and an OSS area server by which the management target device is managed can be determined efficiently and appropriately.

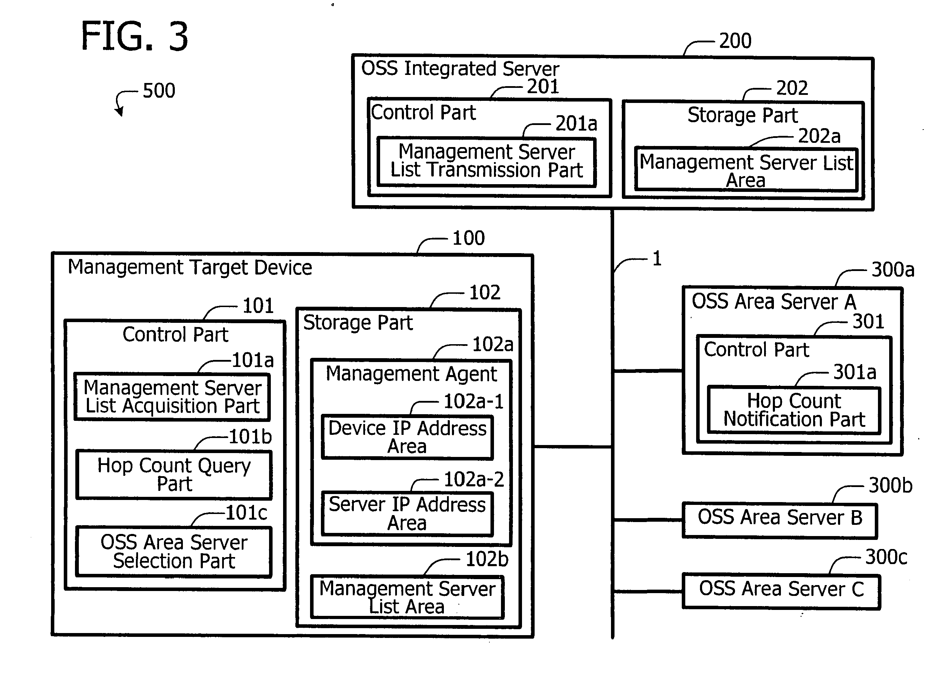

The first embodiment will now be described with reference to Figs. 3 to 5. In the first embodiment, an OSS integrated server (functioning as an integrated management server) holds a management server list in which OSS area servers (management servers) are identified in association with the respective Internet Protocol (IP) addresses. In response to a request from a management target device, which is a device to be managed and connected to the computer network 1, the OSS integrated server sends the management server list to the management target device. In the management target device, a management agent queries all the OSS area servers identified in the management server list about respective hop counts, and selects one of the OSS area servers having the smallest hop count from the management target device, as an optimum OSS area server that should manage the management target device.

The configuration of an operational management system according to the first embodiment will first be described.

Fig. 3 is a block diagram illustrating a configuration of an operational management system according to a first embodiment.

The operational management system 500 includes a management target device 100, an OSS integrated server (an integrated management server) 200, an OSS area server (a management server) A 300a, an OSS area server (a management server) B 300b, and an OSS area server (a management server) C 300c that are connected to each other via a computer network 1.

The management target device 100 includes a control part 101 and a storage part 102. The control part 101 is a controller such as a microcomputer. The control part 101 includes a management server list acquisition part 101a, a hop count query part 101b, and an OSS area server selection part 101c, as components related to the first embodiment.

On the other hand, the storage part 102 includes a management agent 102a. In this case, for example, the management agent 102a can be stored in a storage part 102 as a program code executable by the control part 101.

The management agent 102a includes an device IP address area 102a-1 for storing the IP address of the management target device 100, and a server IP address area 102a-2 for storing the IP address of a server with which the management agent 102 communicates. The storage part 102 further includes a management server list area 102b for storing a management server list which includes address information of a plurality of OSS area servers.

The device IP address area 102a-1 remains in initial states unless the IP address of the management target device 100 is set, the OSS server IP address area 102a-2 remains in initial states unless a server IP address is set, and the management server list area 102b remains in initial states unless the management server list is stored therein.

The OSS integrated server 200 includes a control part 201 and a storage part 202. The control part 201 is a controller, such as a microcomputer, that performs overall control of the OSS integrated server 200. The control part 201 includes a management server list transmission part 201a as a component related to the first embodiment.

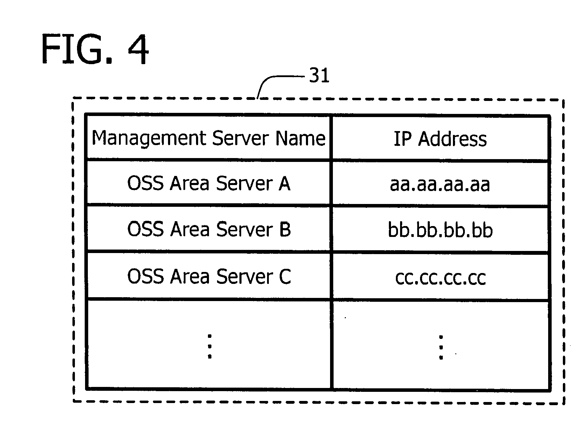

The storage part 202 includes a management server list area 202a. In the management server list area 202a, for example, OSS area server names (management server names) are stored in association with the respective IP addresses, as shown in Fig. 4. Since the OSS integrated server 200 holds the management server list in the management server list area 202a as shown in Fig. 3, the OSS integrated server 200 can centrally manage a management server list, thereby achieving an advantageous effect in which updating of information of the management server list is facilitated while the consistency is maintained.

The OSS area server A 300a (functioning as a management server) includes a control part 301. The control part 301 is a controller, such as a microcomputer, that performs overall control of the OSS area server A 300a. The control part 301 includes a hop count notification part 301a as a component related to the first embodiment. The configurations of the OSS area server B 300b and the OSS area server C 300c are similar to the configuration of the OSS area server A 300a. Thus, the description of these components is omitted here.

IP addresses of the management target device 100 and an OSS integrated server 200 are input by a user via a terminal (not shown in Fig. 3), and then set to the device IP address area 102a-1 and the server IP address area 102a-2, respectively. In response to this setting operation, the management agent 102a is activated and causes the control part 101 to execute the management server list acquisition part 101a, the hop count query part 101b, or the OSS area server selection part 101c.

The management server list acquisition part 101a first communicates with the OSS integrated server 200 via the computer network 1, on the basis of the IP address which is set to the OSS server IP address area 102a-2, and sends the OSS integrated server 200 a request to obtain a management server list which is held by the OSS integrated server 200.

Upon receiving the request from the management target device 100, the OSS integrated server 200 sends the management server list stored in the management server list area 202a to the management target device 100. Then, the management target device 100 stores the management server list received from the OSS integrated server 200 into the management server list area 102b thereof.

Then, the hop count query part 101b queries, via the computer network 1, all OSS area servers listed on the management server list (in the first embodiment, the OSS area server A 300a, the OSS area server B 300b, and the OSS area server C 300c), about hop counts between the management target device 100 and respective OSS area servers.

For example, when the OSS area server A 300a has received a query about a hop count, the hop count notification part 301a sends the management target device 100 a hop count between the management target device 100 and the OSS area server A 300a. The same applies to the OSS area server B 300b and the OSS area server C 300c.

Then, the OSS area server selection part 101c of the management target device 100 compares the respective hop counts of all the OSS area servers, obtained by a query of the hop count query part 101b, with each other and selects an OSS area server having the smallest hop count among all the OSS area servers as a optimum OSS area server that should manage the management target device 100. Then, the OSS area server selection part 101c store the IP address of the selected optimum OSS area server into the server IP address area 102a-2.

The OSS area server selection part 101c further sends the selected optimum OSS area server a notification requesting the selected optimum OSS area server to recognize the management target device 100 as a management target thereof. The optimum OSS area server, which has received the notification from the management target device 100, sends the OSS integrated server 200 a notification indicating that the optimum OSS area server has recognized the management target device 100 as a management target thereof. Moreover, a similar notification can be displayed on a display part of a terminal (not shown in Fig. 3) connected to the computer network 1 so that, for example, an administrator can check the notification.

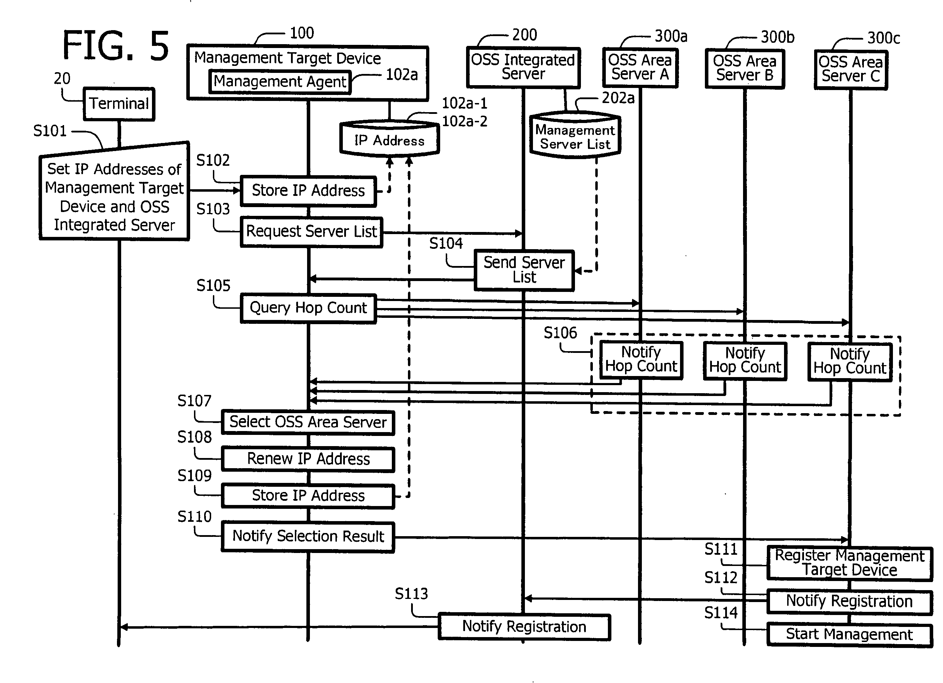

Next, determination process of an optimum OSS area server performed in the operational management system 500 shown in Fig. 3 will be described. Fig. 5 is a sequence diagram showing determination process of an optimum OSS area server performed in the operational management system 500 shown in Fig. 3. In the sequence diagram, for convenience of explanation, management agent 102a is expressed as a representative part of the management target device 100 and the other parts (for example, the management server list acquisition part 101a, the hop count query part 101b, and the OSS area server selection part 101c) are not depicted.

In step S101, the IP address of the management target device 100 and the IP address of the OSS integrated server 200 are first input from a terminal connected to the management target device 100 via the computer network 1. In response to this operation, the management agent 102a of the management target device 100 is activated, so that, in step S102, the IP address of the management target device 100 is stored into the device IP address area 102a-1 and the IP address of the OSS integrated server 200 is stored into the server IP address area 102a-2 as a initial setting value.

Then, in step S103, the management agent 102a requests the OSS integrated server 200 to send the management server list to the management target device 100. Upon receiving the request from the management target device 100, in step S104, the OSS integrated server 200 sends the management server list to the management agent 102a in the management target device 100. The management agent 102a, which has received the management server list from the OSS integrated server 200, stores the management server list into the management server list area 102b (not shown in Fig. 5).

Then, in step S105, the management agent 102a queries a plurality of OSS area servers listed on the management server list about respective hop counts. In response to the query, in step S106, each of the plurality of OSS area servers sends a notification indicating the hop count thereof to the management terminal device 100.

Then, in step S107, the management agent 102a selects one of the plurality of OSS area servers having the smallest hop count, as an optimum OSS area server on the basis of hop counts notified by the plurality of OSS area servers. In this case, it is assumed that the OSS area server C 300c is selected as an optimum OSS area server having the smallest hop count among the plurality of OSS area servers.

Then, in step S108, the management agent 102a renews the IP address of the server with which the management agent 102a communicate, for the IP address of the OSS area server C 300c selected in step S107. Then, in step S109, the server IP address renewed in step S108 is stored into the server IP address area 102a-2.

Then, in step S110, the management agent 102a sends the OSS area server C 300c a notification indicating that the OSS area server C 300c is an optimum OSS area server having the smallest hop count, i.e., that the management target device 100 should be managed by the OSS area server C 300c. In step S111, the OSS area server C 300c, which has received the notification from the management target device 100, registers the management target device 100 as a management target thereof.

Then, in step S112, the OSS area server C 300c sends the OSS integrated server 200 a notification indicating that the management target device 100 has been registered as a management target device thereof. Moreover, in step S113, the OSS integrated server 200 sends a similar notification to the management terminal device 100. A message stating that the OSS area server C 300c has registered the management target device 100 as a management target device can be displayed on a display part of the terminal 20, so that, for example, an administrator can check the message. Then, in step S114, the OSS area server C 300c starts to manage the management target device 100.

According to the first embodiment, an OSS area server (a management server) having the smallest hop count from the management target device 100, among the plurality of OSS area servers, is selected by autonomous operation of the management agent 102a, and the management target device 100 is recognized as a management target of the selected OSS area server. Thus, without complicated operations and manual determination, an OSS area server that is most efficient in network communication can be automatically selected as an optimum OSS area server.

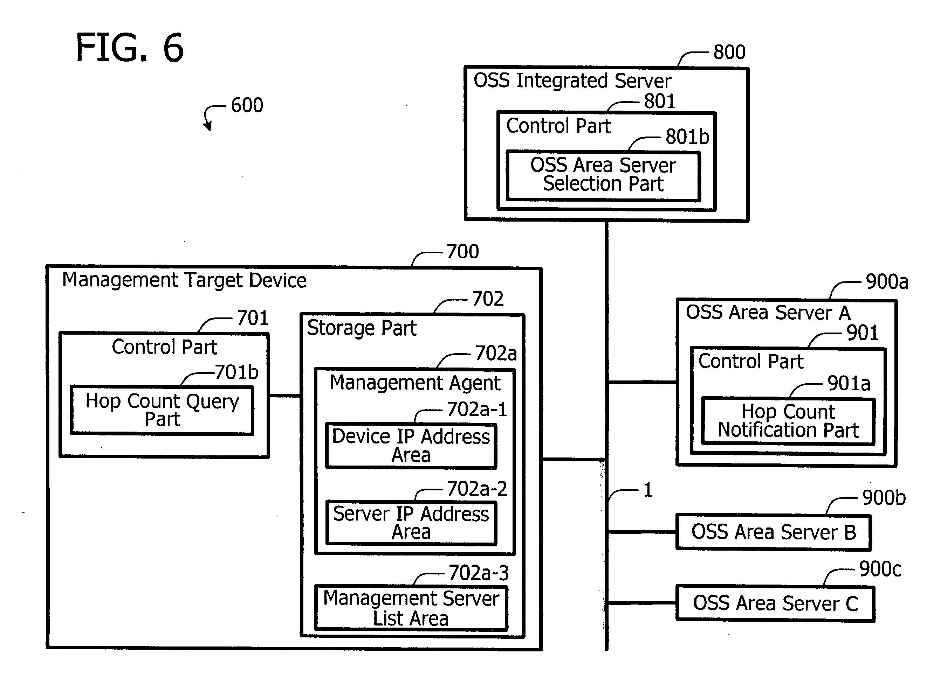

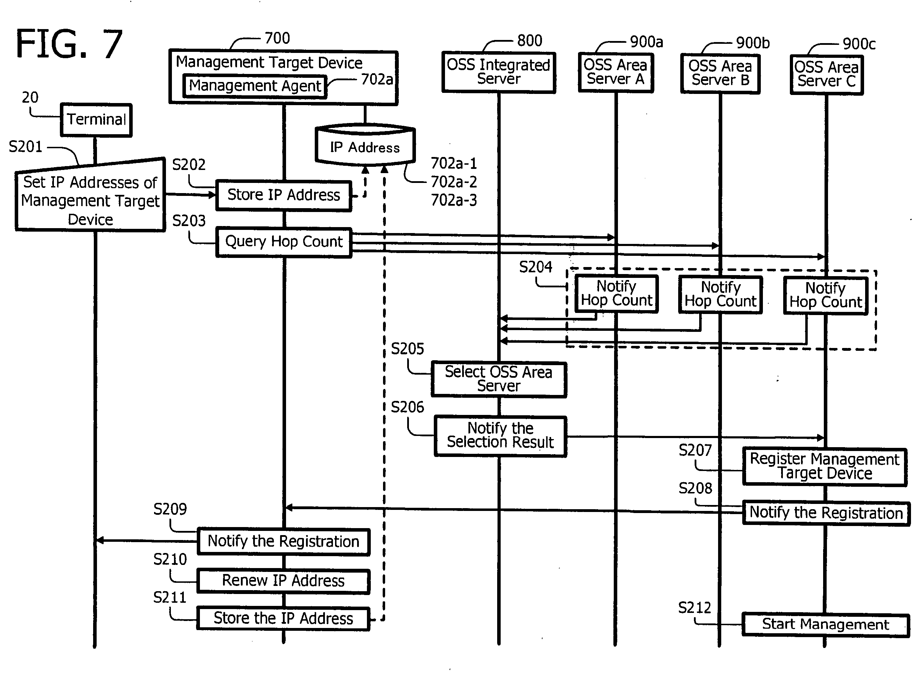

The second embodiment will now be described with reference to Figs. 6 and 7. In the second embodiment, a management agent holds a management server list in which OSS area servers (management servers) are identified in association with the respective IP addresses. A management agent in a management target device, queries all the OSS area servers identified in the management server list about respective hop counts, and the hop counts are notified to an OSS integrated server (an integrated management server). Then, the OSS integrated server selects one of the OSS area servers having the smallest hop count from the management target device, as an optimum OSS area server that should manage the management target device.

The configuration of an operational management system according to the second embodiment will first be described.

Fig. 6 is a block diagram illustrating the configuration of an operational management system according to the second embodiment. The operational management system 600 according to the second embodiment includes the management target device 700, the OSS integrated server 800 (an integrated management server), the OSS area server (a management server) A 900a, the OSS area server B 900b, and the OSS area server C 900c, which are connected to each other via the computer network 1, in the same manner as an operational management system 500 according to the first embodiment.

The management target device 700 includes the control part 701 and the storage part 702. The control part 701 is, for example, a controller such as a microcomputer. The control part 701 includes the hop count query part 701b as a component related to the second embodiment.

The storage part 702 includes the management agent 702a. The management agent 702a further includes an device IP address area 702a-1 for storing the IP address of the management target device 700, a server IP address area 702a-2 for storing the IP address of a server with which the management target device 700 communicates, and a management server list area 702a-3 for storing a management server list.

A management server list as shown in Fig. 4 in the first embodiment is stored in the management server list area 702a-3 in advance.

The device IP address area 702a-1 remains in initial state unless an own device IP address is set, and the server IP address area 702a-2 remains in initial state unless a server IP address is set.

The OSS integrated server 800 includes the control part 801. The control part 801 is a controller, such as a microcomputer, that performs overall control of the OSS integrated server 800. The control part 801 includes an OSS area server selection part 801b as a component related to the second embodiment.

The OSS area server A 900a includes the control part 901. The control part 901 is a controller, such as a microcomputer, that performs overall control of the OSS area server A 900a. The control part 901 includes the hop count notification part 901a as a component related to the second embodiment. The configurations of an OSS area server B 900b and an OSS area server C 900c are similar to the configuration of the OSS area server A 900a. Thus, the description of these components is omitted here.

An own device IP address (an IP address of the management target device 700) and an OSS integrated server IP address input by a user are written to the device IP address area 702a-1 and the server IP address area 702a-2, respectively, as in the first embodiment. In response to this write operation, the management agent 702a is activated and causes the control part 701 to perform the processing of the hop count query part 701b.

The hop count query part 701b queries a plurality of OSS area servers listed on the management server list (in the second embodiment, for example, the OSS area server A 900a, the OSS area server B 900b, and the OSS area server C 900c), about hop counts, in the computer network 1, from the management target device 100 to each of the plurality of OSS area servers.

For example, when the OSS area server A 900a has received a query about a hop count, the hop count notification part 901a sends the OSS integrated server 800 a hop count from the management target device 700 to the OSS area server A 900a. The same applies to the OSS area server B 900b and the OSS area server C 900c.

Upon receiving a notification indicating a hop count from each of the OSS area server A 900a, the OSS area server B 900b, the OSS area server selection part 801b of the OSS integrated server 900 compares the respective hop counts of the plurality of OSS area servers with each other and selects an optimum OSS area server having the smallest hop count among the plurality of OSS area servers.

Then, the OSS area server selection part 801b sends the selected optimum OSS area server (in the second embodiment, it is assumed that the OSS area server C 900c is the selected optimum OSS area server) a notification indicating that the OSS area server C 900c is an optimum OSS area server having the smallest hop count, i.e., that the OSS area server C 300c is an OSS area server that should manage the management target device 700. Upon receiving the notification, the OSS area server C 900c sends the management target device 700 a notification indicating that the management target device 100 is to be managed by the OSS area server C 900c. Moreover, a similar notification can be displayed on a display part of a terminal (not shown in Fig. 6) connected to the management target device via the computer network 1, so that an administrator can check the notification.

Next, determination of an optimum OSS area server performed in the operational management system 600 shown in Fig. 6 will be described.

Fig. 7 is a sequence diagram illustrating determination of a management server according to the second embodiment. In the sequence diagram, for convenience of explanation, management agent 702a is expressed as a representative part of the management target device 700 and the other parts (for example, the hop count query part 701b) are not expressed.

In step S201, the IP address of the management target device 700 is first input from a terminal 20 connected to the management target device 700 via the computer network 1. In response to this operation, the management agent 702a of the management target device 700 is activated, so that, in step S202, the IP address of the management target device 700 is stored into the device IP address area 702a-1.

Then, in step S203, the management agent 702a queries a plurality of OSS area servers listed on the management server list, which is beforehand stored in the management server list area 702a-3, about hop counts from the management target device to each of the plurality of OSS area servers. In response to the query, in step S204, each of the plurality of OSS area servers sends a notification indicating the hop count to the OSS integrated server 800.

Then, in step S205, the OSS area server selecting part 801b of the OSS integrated server 800 selects one of the OSS area servers having the smallest hop count as an optimum OSS area server, on the basis of hop counts notified by the plurality of OSS area servers. In this case, it is assumed that the OSS area server C 900c is selected as the optimum OSS area server in step S205.

Then, in step S206, the OSS area server selecting part 801b of the OSS integrated server 800 sends the OSS area server C 900c a notification indicating that the OSS area server C 900c is the optimum OSS area server having the smallest hop count, i.e., that the management target device 700 should be managed by the OSS area server C 900c. In step S207, the OSS area server C 900c, which has received the notification from the OSS integrated server 800, registers the management target device 700 as a management target thereof.

Then, in step S208, the OSS area server C 900c sends the management target device 100 a notification indicating that the management target device 700 has been registered as a management target thereof. Moreover, in step S209, the management target device 700 can send a similar notification to the terminal 20. Then a message stating that the OSS area server C 900c has registered the management target device 700 as a management target thereof can be displayed on a display part of the terminal 20, so that an administrator can check the message.

Then, in step S210, the management agent 702a renews the IP address of a server with which the management target device 700 communicate, for the IP address of the optimum OSS area server C 900c notified in step S208. Then, in step S211, the IP address renewed in step S210 is stored in the server IP address area 702a-2. Then, in step S212, the OSS area server C 900c starts to manage the management target device 100.

According to the second embodiment, since a management agent holds a management server list including IP addresses that are used to communicate with individual management servers (for example, OSS area servers), the management target device does not need communicate with another device via the computer network in order to obtain the management server list, thereby achieving an advantageous effect in which communication traffic in the computer network can be reduced. Further more, a management server that manages the management target device is automatically determined by querying management servers listed on management server list about respective hop counts.
In the second embodiment, as described above, in response to a query about a hop count which is caused by autonomous operation of the management agent 702a, the OSS integrated server 800 selects an optimum OSS area server having the smallest hop count among a plurality of OSS area servers, and the management target device 700 is recognized as an management target of the selected optimum OSS area server. Thus, without complicated operations and manual determination, an OSS area server that is most efficient in network communication can be automatically selected. Moreover, since the OSS integrated server 800 selects an OSS area server on the basis of hop counts, processing loads on the management agent 702a can be reduced.

In IPv6, at the time of plug-in in a home, application for registration needs to be made in advance, and, in the advance application, a user needs to recognize the management area of an OSS area server. In contrast, in the first and second embodiments, since a management agent autonomously determines an OSS area server and registers a management target device in the determined OSS area server, the burden of these operations can be removed.

While the first and second embodiments have been described, the embodiment is not limited to the above mentioned embodiments, and various different embodiments are possible within the scope of the technical idea described in the claims. Moreover, the advantageous effects of the embodiment are not limited to those described in the above embodiments.

Moreover, out of steps described in the aforementioned embodiments, some or all of steps that are described as being automatically performed may be manually performed, or some or all of steps that are described as being manually performed may be automatically performed by known methods. Moreover, the sequence of processes, the sequence of control, specific names, and information including various types of data and parameters described in the aforementioned embodiments may be changed if not otherwise specified.

Specifically, the number of OSS area servers (management servers) is not limited to three. Moreover, the number of OSS integrated servers (integrated management server) is not limited to one. Moreover, a hop count may be obtained by counting hops or obtained on the basis of a value subtracted from time to live (TTL).

In the first and second embodiments, it is assumed that an management agent implemented into a management target device. Alternatively, a management agent may be implemented as an external probe attached to a management target device.

In the first and second embodiments, a newly added device is registered in an OSS area server without the approval of an administrator (or an operator). Alternatively, a newly added device may be checked on a terminal and registered in an OSS area server after gaining the approval of an administrator.

In the first and second embodiments, not only the Transmission Control Protocol/Internet Protocol (TCP/IP), but also any communication protocol, for example, the Simple Network Management Protocol (SNMP) can be employed as a communication protocol.

In the first and second embodiments, it is determined, on the basis of a distance factor (hop counts) on a computer network, in which OSS area server a management target device is to be registered. Alternatively, it may be determined, on the basis of factors such as service types and management items, in which OSS area server a management target device is to be registered.

In the first and second embodiments, an OSS area server that is autonomously determined by an management agent may be manually changed in a manner that depends on various factors.

In the first embodiment, an example in which the management agent 102a is implemented as a agent program and the agent program is stored in the storage part 102 of the management target device 100, the agent program 102a includes areas for storing the own device IP address and the server IP address, and the storage part 102a includes the management server list area 102b for storing a management server list. In the case, when the agent program 102a is activated, the control part 101 of the management target device 100 executes the predetermined program code as a management agent.

Alternatively, the management agent 102a, the device IP address area 102a-1, the server IP address area 102a-2, and the management server list area 102b may be built in an integrated circuit that includes, in one chip, the control function, the storage function, and the function of communicating with the outside. In this case, the agent program 102a, the device IP address area 102a-1, the server IP address area 102a-2, and the management server list area 102b are stored in the storage function of the integrated circuit. When the agent program 102a is activated, predetermined program code can be executed by the control function of the integrated circuit to establish predetermined communication with the outside using the communication function of the integrated circuit. The same applies to the second embodiment.

Moreover, the components of the devices shown in the drawings are conceptual and may not be necessarily physically configured as shown in the drawings. Each of the devices in whole or in part can be distributed or integrated functionally or physically in a manner that depends on, for example, various types of loads or usage patterns.

Moreover, the processing functions performed by the devices, in whole or in part, may be implemented via a central processing unit (CPU) (or a microcomputer such as a micro processing unit (MPU) or a micro controller unit (MCU)) and a program which is analyzed and executed by the CPU (or a microcomputer such as an MPU or an MCU), or may be implemented as hardware using wired logic.

## Claims

1. A method for managing management target devices each connected to a computer network and managed by one of a plurality of management servers, the method comprising the steps of:
providing a management server list for storing IP addresses of the plurality of management servers;
counting a hop count defined as the number of hops, in the computer network, from the management target device to the each of the plurality of management servers;
selecting a management server having the smallest hop count among the plurality of management servers; and
managing the management target device under the control of the selected management server.

2. The method of claim 1, wherein the counting step is performed by each of the plurality of management servers upon receiving a query from the management target device, and the management target device performs the selecting step by receiving hop counts from the plurality of management servers and notifying a management server having the smallest hop count among the plurality of management servers that the management target device is to be managed under the control thereof.

3. The method of claim 2, wherein the management server list is provided to an integrated management server for managing the plurality of management servers, and the management target device performs the selecting step on the basis of hop counts received from the plurality of management servers listed on the management server list received from the integrated management server.

4. The method of claim 2, wherein the management server list is provided to the management target device, and an integrated management server for managing the plurality of management servers performs the selecting step on the basis of hop counts received from the plurality of management servers listed on the management server list.

5. A management agent implemented into a management target device communicably connected to one of a plurality of management servers via a computer network, the management agent causing a computer to perform a method comprising the steps of:
querying each of the plurality of management servers about a hop count defined as the number of hops, in the computer network, from the management target device to the each of the plurality of management servers;
receiving hop counts from the plurality of management servers;
selecting a management server having the smallest hop count among the plurality of management servers; and
notifying the selected management server that the management target device is to be managed under the control thereof.

6. The management agent of claim 5, further including:
a device IP address area for storing an IP address of the management target device; and
a server IP address area for storing an IP address of a server with which the management agent communicate, wherein
the plurality of management servers are managed by an integrated management server, and the querying step is performed when the IP address of the management target device and the IP address of the integrated management server are set to the device IP address area and the server IP address area, respectively.

7. The management agent of claim 6, wherein the server IP address area is set at the IP address of the management server selected by the selecting step, and the notification that the management target device is to be managed under the control of the selected management server is done to the management server having the IP address set in the server IP address area.

8. The management agent of claim 5, wherein the management agent receives a management server list including IP addresses of the plurality of management servers from an integrated management server for managing the plurality of management servers, and queries each of the plurality of management servers whose IP addresses are listed on the received management server list, about a hop count thereof.

9. The management agent of claim 5, further including a management server list area for storing IP addresses of a plurality of management servers, wherein the management agent queries each of the plurality of management servers whose IP addresses are listed on a management server list stored in the management server list area, about a hop count thereof.

10. An operational management system comprising:
a plurality of management servers connected to a computer network;
one or more management target devices each connected to the computer network and including a management agent causing a computer to perform a method comprising the steps of:
querying each of the plurality of management servers about a hop count defined as the number of hops, in the computer network, from the management target device to the each of the plurality of management servers;
receiving hop counts from the plurality of management servers;
selecting a management server having the smallest hop count among the plurality of management servers; and
notifying the selected management server that the management target device is to be managed under the control thereof.

11. The operational management system of claim 10, wherein each of the plurality of management servers comprises:
query receiving means for receiving from the management target device a query about a hop count defined as the number of hops, in the computer network, from the management target device to the each of the plurality of management servers;
hop count counting means for counting a hop count;
hop count notifying means for notifying a hop count counted by the hop count counting means;
notification receiving means for receiving a notification indicating that the management target device is to be managed under the control of the each of the plurality of management servers; and
management target device managing means for managing the management target device indicated by the notification.

12. The operational management system of claim 11, wherein the hop count notifying means notify a hop count counted by the hop count counting means to the management target device from which the query about a hop count is received, and the notification receiving means receives from the management target device the notification indicating that the management target device is to be managed under the control of the management server.

13. The operational management system of claim 10, further comprising:
an integrated operational server for managing the plurality of management servers, comprising:
means for storing a management server list including IP addresses of the plurality of management servers; and
means for transmitting the management server list to the management agent included in the management target device upon request from the management agent.

14. The operational management system of claim 10, further comprising:
an integrated management server for managing the plurality of management servers, comprising:
means for receiving hop counts from the plurality of management servers;
means for selecting a management server having the smallest hop count among the plurality of management servers; and
means for notifying the selected management server that the management target device is to be managed under the control of the selected management server, wherein
each of the plurality of management servers notifies a hop count counted by the hop count counting means to the integrated management server, and receives from the integrated management server the notification indicating that the management target device is to be managed under the control of the each of the plurality of management servers.
